(19) **Europäisches Patentamt / European Patent Office / Office européen des brevets**

(11) **EP 3 681 947 B1**

(12) **EUROPEAN PATENT SPECIFICATION**

(45) Date of publication and mention
of the grant of the patent:
**04.08.2021 Bulletin 2021/31**

(21) Application number: **18758892.6**

(22) Date of filing: **30.08.2018**

(51) Int Cl.:
*C09D 1/00* *(2006.01)*       *C08L 23/12* *(2006.01)*
*C08L 23/16* *(2006.01)*

(86) International application number:
**PCT/EP2018/073312**

(87) International publication number:
**WO 2019/052821 (21.03.2019 Gazette 2019/12)**

(54) **PERMEABLE POLYMER FILM**

DURCHLÄSSIGE POLYMERFOLIE

FILM POLYMÈRE PERMÉABLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.09.2017 EP 17190989**

(43) Date of publication of application:
**22.07.2020 Bulletin 2020/30**

(73) Proprietor: **Basell Poliolefine Italia S.r.l.**
**20121 Milano (IT)**

(72) Inventors:
• **MASSARI, Paola**
  **44122 Ferrara (IT)**
• **FELISATI, Andrea**
  **44122 Ferrara (IT)**
• **IZZI, Marco**
  **60325 Frankfurt/M. (DE)**
• **BASSI, Paolo**
  **44122 Ferrara (IT)**
• **CATHELIN, Caroline**
  **44122 Ferrara (IT)**
• **GRAZZI, Michele**
  **44122 Ferrara (IT)**
• **CAVALIERI, Claudio**
  **44122 Ferrara (IT)**

(74) Representative: **LyondellBasell**
**c/o Basell Poliolefine Italia**
**Intellectual Property**
**P.le Donegani 12**
**44122 Ferrara (IT)**

(56) References cited:
EP-A1- 2 821 434          EP-A2- 0 877 052
WO-A1-2005/090467    WO-A1-2008/074715
US-A1- 2005 137 336    US-A1- 2006 199 891
US-B1- 6 348 271

**Description**

FIELD OF THE INVENTION

The present invention relates to a polymer film especially suitable for the packaging of fresh foodstuff, like salad and vegetables.

BACKGROUND OF THE INVENTION

It is well known that polypropylene films, and particularly biaxially oriented polypropylene films (BOPP), are widely used for the packaging of foodstuff using automatic machines. In fact the said films are characterized by a particular good balance of processability ("machinability"), optical and mechanical properties, and low permeability to gases, in particular oxygen and carbon dioxide, and water vapour.

However for the packaging of fresh foods, in particular vegetables, greater gas transmission rates are necessary. As a matter of fact, the metabolic activity of vegetable cells continues also after these foods are harvested, cleaned and cut into pieces; therefore the cells still "breathe", consuming the oxygen and emitting carbon dioxide and water vapour. In a closed package this process quickly results in changes of the atmosphere inside the package, making it unsuitable for the continuation of the metabolic activity and favourable for the development of undesired micro-organisms.

Monolayer and multilayer films suitable for packaging fresh produce items that continue to respire after they are harvested are described in US6348271. The films therein described are characterized by the presence of at least one layer of a propylene resin composition comprising a propylene polymer component and up to 70% by weight of an ethylene/propylene copolymer. Additional layers made of propylene polymers can be present.

From another point of view propylene homopolymers are widely used in the production of multilayer films as core layer due to the particular features of said homopolymers. However the oxygen and water vapour transmission rate of the propylene homopolymers are quite low and can be increased.

It has now been found that a particularly good balance of oxygen and water vapour transmission rate is achieved by a composition comprising a specific propylene homopolymer with a polyolefin composition containing a propylene polymer and a propylene/ethylene copolymer having specific features.

SUMMARY OF THE INVENTION

Thus the present disclosure provides a multilayer film comprising at least one core layer comprising a polypropylene composition comprising:

From 95 wt% to 60 wt%; of a propylene homopolymer having a fraction insoluble in xylene at 25°C greater than 90 wt%;
From 5 wt% to 40 wt%; of an heterophasic propylene ethylene copolymer having:

i) xylene soluble fraction at 25°C ranging from 52 wt% to 74 wt%
ii) intrinsic viscosity of the fraction soluble in xylene at 25°C ranging from 2.5 to 5 dl/g;
iii) melt flow rate, MFR, measured according to ISO 1133 at 230 °C with a load of 2.16 kg, ranging from 0.2 g/10 min to 1.5 g/10 min;
iv) flexural modulus lower than 300 MPa, and
v) an ethylene derived units content ranging from 10 wt% to 30 wt% ;

the sum of the amounts of A) and B) being 100.

DETAILED DESCRIPTION OF THE INVENTION

Thus the present disclosure provides a multilayer film comprising at least one core layer comprising a polypropylene composition comprising:

from 95 wt% to 60 wt%; preferably from 90 wt% to 70 wt%; more preferably from 85 wt% to 75 wt% of a propylene homopolymer having a fraction insoluble in xylene at 25°C greater than 90 wt%; preferably greater than 94 wt%; from 5wt% to 40 wt%; preferably from 10 wt% to 30 wt% ; more preferably from 15 wt% to 35 wt% of an heterophasic propylene ethylene copolymer having:

i) xylene soluble fraction at 25°C ranging from 52 wt% to 74 wt%; preferably from 55 wt% to 70 wt% ; more preferably from 61 wt% to 67 wt;

ii) intrinsic viscosity of the fraction soluble in xylene at 25°Cranging from 2.5 to 5 dl/g; preferably from 2.8 to 4.5 dl/g; more preferably from 3.0 to 3.8 dl/g;

iii) melt flow rate, MFR, measured according to ISO 1133 at 230 °C with a load of 2.16 kg, ranging from 0.2 g/10 min to 1.5 g/10 min; preferably from 0.4 g/10 min to 1.0 g/10 min; more preferably from 0.4 g/10 min to 0.8 g/10 min;

iv) flexural modulus lower than 300 MPa, preferably lower than 200 MPa; and

v) an ethylene derived units content ranging from 10 wt% to 30 wt% preferably from 13 wt% to 25 wt%;

the sum of the amounts of A) and B) being 100.

For the present disclosure, the term "copolymer" is referred to polymers containing only two kinds of comonomers, such as propylene and ethylene.

For the present disclosure "core layer" means the layer in a multilayer film that has no contact with the external environment, such as a film A/B/A wherein B is the core layer.

The multilayer films of the present disclosure are characterized by having at least one of the core layers comprising the polypropylene composition of the present disclosure. The remaining layers can be formed of any material known in the art for use in multilayer films or in laminated products. Thus, for example, each layer can be formed of a polypropylene homopolymer or copolymer or polyethylene homopolymer or copolymer or other kind of polymers such as EVA.

The combination and number of layers of the multilayer structures described are not limited. For instance, the multilayer structure can comprises 3-11 layers or more, including 3-9 layers, 3-7 layers, and 3-5 layers, with combinations including A/B/A, A/B/C, A/B/C/B/A, and A/B/C/D/C/B/A, provided that at least one core layer such as B or D comprises a propylene composition of the present disclosure.

In certain embodiments, the number of layers of the multilayer film of the present disclosure is 3 or 5, wherein at least one core layer comprises the propylene composition of the present disclosure. For instance, structures such as A/B/A or A/B/C, wherein B is the propylene composition of the present disclosure, are possible.

Component A is a commercial homopolymer of propylene such as Moplen HP522H, Moplen HP520H, Moplen HP525J, or Moplen HP526J.

Component B) is a commercial heterophasic propylene ethylene copolymer such as Adflex Q100F.

The multilayer film of the present disclosure shows an enhanced oxygen and water transmission so that it can be advantageously used for the packaging of fresh foodstuff, like salad and vegetables.

All the film layers may also contain the additives that are commonly used for the film manufacturing, and especially for the films used for packaging applications with automatic machines, such as anti-oxidants, process stabilizers, slip agents, antistatic agents, antiblock agents, and antifog agents.

Independently from the structure of the film, the overall film thickness is preferably from 9 to 100 microns, the thickness of the layer(s) A) is preferably from 0.5 to 20 microns, and that of the layer(s) B), typically used as inner layer(s), is from 9.5 to 99.5 microns.

The said films are produced by using processes well known in the art.

In particular, extrusion processes can be used.

In said extrusion processes the polymer materials to be used for the various layers are molten in different extruders and extruded through a narrow die gap. Subsequent from the exit from the die, the material can be cooled, heated and optionally oriented in several ways or in combination. Examples of such processes are cast, blown, extrusion coating, uniaxially oriented, simultaneous biaxially oriented, and sequential biaxially oriented film processes.

Specific examples of such processes are the blown film and BOPP processes herein below explained.

Blown Film

The molten polymer materials are forced through a circular shaped die.

The extrudate which is drawn off has the shape of a tube, which is inflated by air to form a tubular bubble. The bubble is cooled and collapsed before winding-up.

The blown film process is preferred for the preparation of the film of the present invention.

BOPP

The molten polymer materials are forced continuously through a narrow die. The extruded molten material is pulled away from the die and cooled, then heated again and stretched both in the Machine Direction (MD) and in the Transverse Direction (TD). After the stretching process, the film is cooled and then wound-up.

The following examples are given to illustrate, not to limit, the present invention:

EXAMPLES

**Xylene-soluble (XS) Fraction at 25 °C**

Solubility in xylene at 25 °C: Determined as follows:
2.5 g of polymer and 250 ml of xylene are introduced in a glass flask equipped with a refrigerator and a magnetic stirrer. The temperature is raised in 30 minutes up to the boiling point of the solvent. The resulting clear solution is then kept under reflux and stirred for 30 minutes. The closed flask is then kept for 30 minutes in a bath of ice and water, then in a thermostatic water bath at 25 °C for 30 minutes. The resulting solid is filtered on quick filtering paper. 100 ml of the filtered liquid is poured in a previously weighed aluminum container, which is heated on a heating plate under nitrogen flow to remove the solvent by evaporation. The container is then kept on an oven at 80 °C under vacuum until a constant weight is obtained. The weight percentage of polymer soluble in xylene at room temperature is then calculated.
The content of the xylene-soluble fraction is expressed as a percentage of the original 2.5 grams and then, by the difference (complementary to 100%), the xylene insoluble percentage (%);

**Melt Flow Rate (MFR)**

Measured according to ISO 1133 at 230 °C with a load of 2.16 kg, unless otherwise specified.

**Intrinsic Viscosity (IV)**

The sample is dissolved in tetrahydronaphthalene at 135 °C and then poured into a capillary viscometer. The viscometer tube (Ubbelohde type) is surrounded by a cylindrical glass jacket; this setup allows for temperature control with a circulating thermostatic liquid. The downward passage of the meniscus is timed by a photoelectric device.
The passage of the meniscus in front of the upper lamp starts the counter, which has a quartz crystal oscillator. The meniscus stops the counter as it passes the lower lamp and the efflux time is registered: this is converted into a value of intrinsic viscosity through Huggins' equation (Huggins, M.L., J. Am. Chem. Soc., 1942, 64, 2716) provided that the flow time of the pure solvent is known at the same experimental conditions (same viscometer and same temperature). One single polymer solution is used to determine $[\eta]$.

**Ethylene content in the copolymers**

$^{13}$C NMR spectra were acquired on a Bruker AV-600 spectrometer equipped with cryoprobe, operating at 160.91 MHz in the Fourier transform mode at 120 °C.
The peak of the $S\beta\beta$ carbon (nomenclature according to "Monomer Sequence Distribution in Ethylene-Propylene Rubber Measured by 13C NMR. 3. Use of Reaction Probability Mode" C. J. Carman, R. A. Harrington and C. E. Wilkes, Macromolecules, 1977, 10, 536) was used as an internal reference at 29.9 ppm. The samples were dissolved in 1,1,2,2-tetrachloroethane-$d2$ at 120 °C with a 8 % wt/v concentration. Each spectrum was acquired with a 90° pulse, and 15 seconds of delay between pulses and CPD to remove $^1$H-$^{13}$C coupling. 512 transients were stored in 32K data points using a spectral window of 9000 Hz.
The assignments of the spectra, the evaluation of triad distribution and the composition were made according to Kakugo ("Carbon-13 NMR determination of monomer sequence distribution in ethylene-propylene copolymers prepared with $\delta$-titanium trichloride-diethylaluminum chloride" M. Kakugo, Y. Naito, K. Mizunuma and T. Miyatake, Macromolecules, 1982, 15, 1150) using the following equations:

$$PPP = 100 \ T\beta\beta/S \qquad PPE = 100 \ T\beta\delta/S \qquad EPE = 100 \ T\delta\delta/S$$

$$PEP = 100 \ S\beta\beta/S \qquad PEE = 100 \ S\beta\delta/S \qquad EEE = 100 \ (0.25 \ S\gamma\delta + 0.5 \ S\delta\delta)/S$$

$$S = T\beta\beta + T\beta\delta + T\delta\delta + S\beta\beta + S\beta\delta + 0.25 \ S\gamma\delta + 0.5 \ S\delta\delta$$

The molar percentage of ethylene content was evaluated using the following equation:
E% mol = 100 * [PEP+PEE+EEE]The weight percentage of ethylene content was evaluated using the following equation:

$$E\% \, mol * MWE$$

$$E\% \, wt. = E\% \, mol * MWE + P\% \, mol * MWP$$

where P% mol is the molar percentage of propylene content, while MWE and MWP are the molecular weights of ethylene and propylene, respectively.

The product of reactivity ratio r1r2 was calculated according to Carman (C.J. Carman, R.A. Harrington and C.E. Wilkes, Macromolecules, 1977; 10, 536) as:

$$r_1 r_2 = 1 + \left( \frac{EEE + PEE}{PEP} + 1 \right) - \left( \frac{P}{E} + 1 \right) \left( \frac{EEE + PEE}{PEP} + 1 \right)^{0.5}$$

The tacticity of Propylene sequences was calculated as mm content from the ratio of the PPP $mmT_{\beta\beta}$ (28.90-29.65 ppm) and the whole $T_{\beta\beta}$ (29.80-28.37 ppm).

**Flexural Modulus**

Flexural Modulus has been measured according to ISO 178, and supplemental conditions according to ISO 1873-2 on an injection molded sample

**MEASUREMENTS ON FILMS**

**Oxygen transmission (OTR)**

Measured on a Mocon OX-TRAN 2/60 unit, commercially available from Mocon, Inc., according to ASTM D3985-05(2010)el at 23°C, 0% relative humidity (RH), and 100% $O_2$.

**Water vapor transmission (WVTR)**

Measured on a Mocon PERMATRAN W3/33 unit, commercially available from Mocon, Inc. according to ASTM F1249 at 37.8°C and 90% relative humidity (RH).

**Component A**

Component A is the commercial grade Moplen HP522H a propylene homopolymer sold by LyondellBasell having a MFR of 2.0 g/10 min and a solubility in xylene at 25°C of 4.9 wt%.

**Component B**

Component B is 1B) heterophasic propylene copolymer sold by LyondellBasell with the trade name of Adflex C200F; and
2B) heterophasic propylene copolymer sold by LyondellBasell with the tradenamme of Adflex Q100F;
the properties of components 1B) and 2B) are reported in Table 1.

Table 1

| | | Adflex C200F | Adflex Q100F |
|---|---|---|---|
| Ethylene content | Wt% | 14,9 | 20,1 |
| Xylene soluble at 25°C | Wt% | 51,2 | 64 |
| Intrinsic viscosity xylene solubles | dl/g | 2.24 | 3.27 |
| Flexural modulus | MPa | 200 | 98 |

**Examples 1-3 and Comparative Examples 1-4**

Components A and B have been blended in various percentages, as reported in Table 2:

Table 2

| components | | Comp 1 | Ex 1 | Comp 2 | Ex 2 | Comp 3 | Ex 3 | Comp 4 |
|---|---|---|---|---|---|---|---|---|
| A | Wt% | 80 | 80 | 70 | 70 | 60 | 60 | 100 |
| B1 | Wt% | 20 | | 30 | | 40 | | |
| B2 | Wt% | | 20 | | 30 | | 40 | |

BOPP A/B/A films were produced. The B layer was made with the compositions of Examples 1-3 and Comparative Examples 1-4, while the A layer was Moplen HP522H. The thickness of the films was 30 microns, with the A layer being 1 micron. The results of the analysis of the films are reported in Table 3.

Table 3

| components | | Comp 1 | Ex 1 | Comp 2 | Ex 2 | Comp 3 | Ex 3 | Comp 4 |
|---|---|---|---|---|---|---|---|---|
| WVTR | cc/m$^2$ x day | 5.13 | 6.1 | 6.44 | 6.5 | 6.99 | 8.7 | 3.2 |
| OTR | cc/m$^2$ x day | 2252 | 2525 | 2394 | 3307 | 3359 | 4884 | 1697 |
| Tear resistance | N | 0.17 | 0.23 | 0.21 | 0.23 | 0.26 | 0.23 | 0.18 |

From Table 3 clearly shows that the OTR and the WVTR of the multilayer film according to the present invention is increased with respect to the comparative examples.

**Claims**

1. A multilayer film comprising at least one core layer comprising a polypropylene composition comprising:

   A) From 95 wt% to 60 wt%; of a propylene homopolymer having a fraction insoluble in xylene at 25 °C greater than 90 wt%;
   B) From 5wt% to 40 wt%; of an heterophasic propylene ethylene copolymer having:

   i) xylene soluble fraction at 25 °C ranging from 52 wt% to 74 wt%;
   ii) intrinsic viscosity of the fraction soluble in xylene at 25 °C ranging from 2.5 to 5 dl/g;
   iii) melt flow rate, MFR, Measured according to ISO 1133 at 230 °C with a load of 2.16 kg, ranging from 0.2 g/10 min to 1.5 g/10 min;
   iv) flexural modulus lower than 300 MPa; and
   v) an ethylene derived units content ranging from 10 wt% to 30 wt%;

   the sum of the amounts of A) and B) being 100.

2. The multilayer film according to claim 1 wherein the propylene composition comprises from 90 wt% to 70 wt% of component A) and from 10 wt% to 30 wt% of component B).

3. The multilayer film according to anyone of claims 1-2 wherein the propylene composition comprises from 85 wt% to 75 wt% of component A) and from 15 wt% to 35 wt% of component B)

4. The multilayer film according to anyone of claims 1-3 wherein in component B) the xylene soluble fraction at 25 °C ranges from 55 wt% to 70 wt%.

5. The multilayer film according to anyone of claims 1-4 wherein in component B) the intrinsic viscosity of the fraction soluble in xylene at 25 °C ranges from 2.8 to 4.5 dl/g.

6. The multilayer film according to anyone of claims 1-5 wherein in component B) the melt flow rate, MFR, measured according to ISO 1133 at 230 °C with a load of 2.16 kg, ranges from 0.4 g/10 min to 1.0 g/10 min.

7. The multilayer film according to anyone of claims 1-6 wherein in component B) the flexural modulus is lower than 200 MPa.

8. The multilayer film according to anyone of claims 1-6 wherein in component B) the ethylene derived units content ranges from 13 wt% to 25 wt%.

9. The multilayer film according to anyone of claims 1-7 wherein the propylene composition comprises from 85 wt% to 75 wt% of component A) and from 15 wt% to 35 wt% of component B).

10. The multilayer film according to anyone of claims 1-7 wherein in component A) the fraction insoluble in xylene at 25 °C is greater than 94 wt%.

**Patentansprüche**

1. Mehrschichtige Folie, die mindestens eine Kernschicht umfasst, die eine Polypropylenzusammensetzung umfasst, welche umfasst:

   A) 95 Gew.% bis 60 Gew.% eines Propylenhomopolymers mit einer in Xylol bei 25 °C unlöslichen Fraktion von größer als 90 Gew.%;
   B) 5 Gew.% bis 40 Gew.% eines heterophasigen Propylen-Ethylen-Copolymers mit

      i) einer in Xylol bei 25 °C löslichen Fraktion im Bereich von 52 Gew.% bis 74 Gew.%;
      ii) einer Grenzviskosität der in Xylol bei 25 °C löslichen Fraktion im Bereich von 2,5 bis 5 dl/g;
      iii) einer Schmelzflussrate, MFR, gemessen gemäß ISO 1133 bei 230 °C unter einer Last von 2,16 kg, im Bereich von 0,2 g/10 min bis 1,5 g/10 min;
      iv) einem Biegemodul unter 300 MPa; und
      v) einem Gehalt an von Ethylen abgeleiteten Einheiten im Bereich von 10 Gew.% bis 30 Gew.%;

   wobei die Summe der Mengen von A) und B) 100 beträgt.

2. Mehrschichtfolie nach Anspruch 1, wobei die Propylenzusammensetzung 90 Gew.% bis 70 Gew.% Komponente A) und 10 Gew.% bis 30 Gew.% Komponente B) umfasst.

3. Mehrschichtfolie nach einem der Ansprüche 1 bis 2, wobei die Propylenzusammensetzung 85 Gew.% bis 75 Gew.% Komponente A) und 15 Gew.% bis 35 Gew.% Komponente B) umfasst.

4. Mehrschichtfolie nach einem der Ansprüche 1 bis 3, wobei in Komponente B) die in Xylol bei 25 °C lösliche Fraktion im Bereich von 55 Gew.% bis 70 Gew.% liegt.

5. Mehrschichtfolie nach einem der Ansprüche 1 bis 4, wobei in Komponente B) die Grenzviskosität der in Xylol bei 25 °C löslichen Fraktion im Bereich von 2,8 dl/g bis 4,5 dl/g liegt.

6. Mehrschichtfolie nach einem der Ansprüche 1 bis 5, wobei in Komponente B) die Schmelzflussrate, MFR, gemessen gemäß ASTM D 1133 bei 230 °C unter einer Last von 2,16 kg, im Bereich von 0,4 g/10 min bis 1,0 g/10 min liegt.

7. Mehrschichtfolie nach einem der Ansprüche 1 bis 6, wobei in Komponente B) der Biegemodul unter 200 MPa liegt.

8. Mehrschichtfolie nach einem der Ansprüche 1 bis 6, wobei in Komponente B) der Gehalt an von Ethylen abgeleiteten Einheiten im Bereich von 13 Gew.% bis 25 Gew.% liegt.

9. Mehrschichtfolie nach einem der Ansprüche 1 bis 7, wobei die Propylenzusammensetzung 85 Gew.% bis 75 Gew.% Komponente A) und 15 Gew.% bis 35 Gew.% Komponente B) umfasst.

10. Mehrschichtfolie nach einem der Ansprüche 1 bis 7, wobei in Komponente A) die in Xylol bei 25 °C unlösliche Fraktion größer als 94 Gew.% ist.

**Revendications**

1. Film multicouche comprenant au moins une couche centrale comprenant une composition de polypropylène comprenant :

   A) 95 % en poids à 60 % en poids d'un homopolymère de propylène présentant une fraction insoluble dans le xylène à 25°C supérieure à 90 % en poids ;
   B) 5 % en poids à 40 % en poids d'un copolymère hétérophasique de propylène-éthylène présentant :

   i) une fraction soluble dans le xylène à 25°C allant de 52 % en poids à 74 % en poids ;
   ii) la viscosité intrinsèque de la fraction soluble dans le xylène à 25°C allant de 2,5 à 5 dl/g ;
   iii) un indice de fluidité à chaud, MFR, mesuré selon la norme ISO 1133 à 230°C sous une charge de 2,16 kg, allant de 0,2 g/10 min à 1,5 g/10 min ;
   iv) un module de flexion inférieur à 300 MPa ; et
   v) une teneur en motifs dérivés d'éthylène allant de 10 % en poids à 30 % en poids ;

   la somme des quantités de A) et de B) valant 100.

2. Film multicouche selon la revendication 1, la composition de propylène comprenant de 90 % en poids à 70 % en poids du constituant A) et de 10 % en poids à 30 % en poids du constituant B).

3. Film multicouche selon l'une quelconque des revendications 1 à 2, la composition de propylène comprenant de 85 % en poids à 75 % en poids du constituant A) et de 15 % en poids à 35 % en poids du constituant B).

4. Film multicouche selon l'une quelconque des revendications 1 à 3, la fraction soluble dans le xylène à 25°C dans le constituant B) allant de 55 % en poids à 70 % en poids.

5. Film multicouche selon l'une quelconque des revendications 1 à 4, la viscosité intrinsèque de la fraction soluble dans le xylène à 25°C dans le constituant B) allant de 2,8 à 4,5 dl/g.

6. Film multicouche selon l'une quelconque des revendications 1 à 5, l'indice de fluidité à chaud, MFR, mesuré selon la norme ISO 1133 à 230°C sous une charge de 2,16 kg dans le constituant B), allant de 0,4 g/10 min à 1,0 g/10 min.

7. Film multicouche selon l'une quelconque des revendications 1 à 6, le module de flexion dans le constituant B) étant inférieur à 200 MPa.

8. Film multicouche selon l'une quelconque des revendications 1 à 6, la teneur en motifs dérivés d'éthylène dans le constituant B) allant de 13 % en poids à 25 % en poids.

9. Film multicouche selon l'une quelconque des revendications 1 à 7, la composition de propylène comprenant de 85 % en poids à 75 % en poids du constituant A) et de 15 % en poids à 35 % en poids du constituant B).

10. Film multicouche selon l'une quelconque des revendications 1 à 7, la fraction insoluble dans le xylène à 25°C dans le constituant A) étant supérieure à 94 % en poids.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6348271 B

### Non-patent literature cited in the description

- **HUGGINS, M.L.** *J. Am. Chem. Soc.,* 1942, vol. 64, 2716
- **C. J. CARMAN ; R. A. HARRINGTON ; C. E. WILKES.** Monomer Sequence Distribution in Ethylene-Propylene Rubber Measured by C NMR. 3. Use of Reaction Probability Mode. *Macromolecules,* 1977, vol. 10, 536
- **M. KAKUGO ; Y. NAITO ; K. MIZUNUMA ; T. MIYATAKE.** Carbon-13 NMR determination of monomer sequence distribution in ethylene-propylene copolymers prepared with δ-titanium trichloride-diethylaluminum chloride. *Macromolecules,* 1982, vol. 15, 1150
- **C.J. CARMAN ; R.A. HARRINGTON ; C.E. WILKES.** *Macromolecules,* 1977, vol. 10, 536